# EUROPEAN PATENT SPECIFICATION

(11) **EP 3 041 620 B1**
(45) Date of publication and mention of the grant of the patent: **06.11.2019**
(21) Application number: 14842460.9
(22) Date of filing: 02.09.2014
(51) Int. Cl.: B22D 11/128, B65G 39/18, F16C 11/02

(54) **ROLL LINE ASSEMBLY FOR CONTINUOUS CASTING**
WÄLZLINIE ZUM KONTINUIERLICHEN GIESSEN
ENSEMBLE DE LIGNES DE ROULEAUX POUR UNE COULÉE CONTINUE

(30) Priority: 04.09.2013 SE 1300577
(43) Date of publication of application: 13.07.2016
(73) Proprietor: Aktiebolaget SKF, 415 50 Göteborg (SE)
(72) Inventor: MITCHELL, Erik, S-43651 Hoväs (SE); COSTA, Patrik, S-446 97 Älvängen (SE)
(74) Representative: Kuhstrebe, Jochen
(86) International application number: PCT/SE2014/051008
(87) International publication number: WO 2015/034421

(56) References cited:
- EP-A1- 0 037 549
- EP-A1- 2 687 303
- WO-A1-2012/118413
- DE-A1- 2 710 318
- DE-A1- 10 128 999
- DE-A1-102008 029 944
- GB-A- 2 240 608
- JP-A- 2005 014 029
- US-A- 4 164 252
- US-A1- 2010 227 749
- US-A1- 2013 146 244

## Description

### Field of the Invention

The present invention relates to a roll line assembly for supporting and transporting hot material in a continuous caster. The present invention also relates to an assembly unit for such a roll line assembly.

### Background of the Invention

Continuous casting of steel, also called strand casting, is the process whereby slabs of metal are continuously cast from molten steel. More specifically, the molten metal is poured from a ladle down into a tundish from which it is conveyed to a water-cooled mould. The molten steel is thereafter solidified into the semi-finished slab for subsequent rolling in the finishing mills. The slab is continuously fed between two tracks formed by a plurality of roll line assemblies so as to further shape and cool the slab to the final thickness of the cast material. In this manner, the slab is immediately supported by closely spaced assembly units. To increase the rate of solidification, the assembly units may be water-cooled or the slab may be sprayed with large amounts of water as it passes through a spray-chamber.

In a curved apron casting machine, the slab, or steel strand, exits the mould vertically (or on a near vertical curved path) and as it travels between the tracks of assembly units, they gradually curve the slab, or steel strand, towards the horizontal.

Continuous casting of steel is a demanding process involving high temperatures and large temperature variations. Furthermore, water cooling of the slab, or steel strand, results in a very corrosive environment. Accordingly, the assembly units are required to withstand heavy conditions that are gradually destructing the assembly units and its components. As an example, the material of the assembly units may degrade due to corrosion or extremely high temperature. Eventually, the assembly unit must be replaced or undergo maintenance requiring a lengthy and costly interruption of the continuous casting process. In some continuous casting machines, the two tracks formed by the roll line assemblies may include several block, wherein each block includes a plurality of roll line assemblies. In this case, maintenance is carried out by replacing the complete block of roll line assemblies, including one or several damaged roll line assemblies, with a remanufactured block of roll line assemblies. The block including the damaged roll line assemblies will thereafter undergo appropriate remanufacturing by remanufacturing of the damaged roll line assemblies so as to form a new and remanufactured block. In this manner, a part of the remanufacturing process can be carried out while the continuous casting machine is running. If the new and remanufactured block is not immediately installed, it will be lined-up for being installed when needed. The process of replacing a block of roll line assemblies with a remanufactured block of roll line assemblies is normally completed within 1 hour.

As the width of the roll line typically is several meters, the roll line often includes several assembly units. Conventionally, an assembly unit includes an inner shaft and a roll mantle having an outer surface for supporting and transporting the slab, steel strand. Alternatively, the roll line may include an inner shaft and several roll mantles arranged spaced apart along and about the inner shaft. US 2011/0114282A1 discloses three roller modules which are assembled into a strand guide roller by two plug connections. The strand guide roller further includes a bearing positioned between the first and the second roller modules and another bearing between the second and the third roller modules.

Over time, the components of the continuous casting machine have continuously been further developed and for the roll line, or assembly unit, it has often been an aim to ensure, or minimize the risk, that the internal components, e.g. the shaft and the bearings, are not subjected to the hot temperature of the slab. However, this is not an easy design even with various sealing arrangement. As such, the service life can only be momentarily extended.

GB 2 240 608 A relates to a roll for use in rolling steel strip from a continuous casting machine and is composed of cylindrical sections each having a shaft extending therethrough. The shafts are supported at their ends with bearings.

DE 101 28 999 A1 relates to a roller which comprises a shaft and a casing positioned on the shaft on one roller end. The casing is electrically and/or thermally insulated on the roller ends.

DE 27 10 318 A1 discloses a roller presenting a body which is surrounded by a mantle.

EP 2 687 303 A1 relates to a guide roller for a strand casting system, wherein the guide roller is mounted rotatably in a bearing mount and comprises a cylindrical roller core and a roller jacket.

EP 0 037 549 A1 relates to a continuous casting installation comprising a plurality of strand guide rolls, wherein the strand guide rolls are mounted mutually independently and coupled together, and can thereby rotate together.

WO 2012/118413 A1 relates to a method for extending the service life of a roll line in a continuous casting machine, wherein the roll line comprises a rotating shaft and at least one roll mantle mounted onto the shaft.

It would be beneficial if it could be ensured that the replacement of the roll line, or assembly unit, can be made in a simple and effective manner. In particular, it is desirable that the costs for remanufacturing of the roll line, or assembly units, are minimised.

### Summary of the Invention

It is an object of the present invention to provide a roll line assembly having improved functionalities in relation to prior art solutions.

This invention is defined by the independent claim 1. Embodiments are set forth in the dependent claims, the description and the drawings.

According to a first aspect of the present invention, there is provided a roll line assembly for supporting and transporting hot material in a continuous caster. The roll line assembly comprises a first assembly unit and a second assembly unit.

The first assembly unit comprises a rotatable first shaft defining a first longitudinal axis A, and having a first end region spaced apart from a second end region along the first longitudinal axis A. The first assembly unit also comprises a first roll mantle enclosing the rotatable first shaft around a circumferential direction, the first roll mantle having a first outer surface for supporting and transporting hot material and a first inner surface being operatively connected to the rotatable first shaft. The first assembly unit further comprises a first bearing and a second bearing for allowing rotation of the first mantel and the rotatable first shaft about the first longitudinal axis A, wherein the first bearing is arranged on the first end region and the second bearing is arranged on the second end region.

The second assembly unit comprises a rotatable second shaft defining a second longitudinal axis A', and having a first end region spaced apart from a second end region along the second longitudinal direction A'. The second assembly unit also comprises a second roll mantle enclosing the rotatable second shaft around the circumferential direction, the second roll mantle having a second outer surface for supporting and transporting hot material and a second inner surface being operatively connected to the rotatable second shaft. The second assembly unit further comprises a first bearing and a second bearing for allowing rotation of the second mantel and the rotatable second shaft about the second longitudinal axis A', wherein the first bearing is arranged on the first end region and the second bearing is arranged on the second end region.

The rotatable first shaft is configured to be releasably connected to the rotatable second shaft such that the rotatable first shaft and the rotatable second shaft can be maintained in longitudinal axial alignment during rotation of the roll line assembly, whereby the first assembly unit is operatively engaged with the second assembly unit. By the provision that the rotatable first shaft and the rotatable second shaft are configured to be releasably connected to each other, the first longitudinal axis A and the second longitudinal axis A' coincide with each other when the rotatable first shaft and the rotatable second shaft are connected.

By a roll mantle being "operatively connected" to a shaft is meant that the roll mantle has an inner surface which is connected to the shaft such that the roll mantle and the shaft are fixed relative to each other. The attachment (or connection) between the roll mantle and the shaft can be such that the roll mantle and the shaft are permanently attached to each other or releasable from each other. In other words, the roll mantle and the shaft are operatively connected in a manner allowing the components to rotate about a centre axis of the roll assembly as a single unit. It is to be noted that the centre axis of the roll assembly typically corresponds to the first longitudinal axis A and the second longitudinal axis A' when the first assembly unit is operatively engaged to the second assembly unit.

Hence, the term "operatively connected" typically means that a component is capable of interacting with another component in a functional manner allowing the two components to move as a single unit.

A roll mantle can either be directly or indirectly operatively connected to the shaft. In this context of the present invention, the term directly connected means that the e.g. a surface of the roll mantle is operatively connected to a surface of the shaft without any further components therebetween. Thus, by the term indirectly connected means that a surface of the roll mantle is operatively connected to a surface of the shaft via an additional component, e.g. a wedge. Typically, the wedge is configured to bridge between the roll mantle and the shaft in a radial direction of the roll assembly unit, and also configured to prevent relative rotational movement between the shaft and the mantle. The arrangement and the function of the wedge are further described below.

The roll line assembly is typically used for supporting and transporting hot material such as hot steel in a continuous caster. By connecting the shafts of an appropriate number of assembly units together, a roll line having a desired length can be provided.

By the principle of the present invention, it becomes possible to provide a roll line assembly having two separate shaft units, one shaft unit for each roll mantle. More specifically, by the provision that the shafts of two assembly units are configured to be releasably connected to each other, it is not required to replace a shaft of an entire roll line assembly when a portion of the shaft of a single assembly unit is worn-out or damaged due to various malfunctions of the continuous casting process, e.g. clogged cooling nozzles resulting in overheated bearings or normalized roll mantle surfaces that may accelerate wear of the components making up the roll line assembly. If the roll line assembly is arranged adjacent to the continuous casting machine, the roll line assembly may be damaged due to a break out, i.e. an accident caused by the failure of the walls of the hearth of the steel slab, resulting in liquid steel flowing uncontrolled out of the steel slab. Instead, by the principle of the present invention, it becomes possible to replace the shaft of only the worn-out or damaged assembly unit.

Moreover, since the shaft and the roll mantle of an assembly unit are separable, it becomes possible, for instance, to reuse the shaft when the corresponding roll mantle is damaged; i.e. only the damaged roll mantle needs to be replaced.

Hence, an advantage of the present invention is that the costs for remanufacturing can be reduced compared to a roll line having one single roll shaft. In this context, it is to be noted that two factors of significant impact on the remanufacturing cost are the costs for maintenance work (repair of worn out or damaged components) and the costs for the new components. By only having to replace, for example, the shaft of a single assembly unit, it becomes possible to radically reduce the material costs at remanufacturing compared to the situation when the shaft of an entire roll line or the entire assembly unit has to be replaced. Moreover, costs can be reduced because the shafts can be produced from a bar having a smaller diameter than the mantle, which can reduce the amount of material required for producing the shafts.

During remanufacturing, an assembly unit is typically disconnected from the adjacent assembly unit or assembly units. The roll mantle and bearings are initially removed from the shaft. Thereafter, either the shaft is replaced by a new shaft or the roll mantle is replaced by a new roll mantle. Alternatively, both the shaft and the roll mantle are replaced. It should be readily understood that also the bearings can be replaced at remanufacturing. Alternatively, the bearings can be maintained unchanged at remanufacturing.

It is to be noted that the term "releasably connected" means that the rotatable first shaft is operatively connected to the rotatable second shaft during rotation of the roll line assembly so as to ensure that the rotatable first shaft and the rotatable second shaft are maintained in axial alignment during use (i.e. rotation of the roll line allowing), whilst allowing the rotatable first shaft to be released from the rotatable second shaft when the roll line assembly is to be remanufactured, i.e. when the roll line assembly is not in use. Accordingly, it should be readily understood that the first assembly unit and the second assembly unit form a continuous roll line assembly during use (rotation of the roll line assembly) due to the arrangement of the rotatable first shaft and rotatable second shaft and by being releasably connected to each other. In this manner, the shafts are arranged in an axially fixed manner when assembled. Hence, the term "releasably connected" typically means that a component is capable of interacting with another component in a functional manner allowing the two components to be connected in one configuration when assembled while being released from each other in another configuration (disassembled configuration). There are several different possibilities to provide a releasable connection between the rotatable first shaft and the rotatable second shaft.

In one example embodiment, the rotatable first shaft may be configured to be releasably connected to the rotatable second shaft via a synchronisation coupling. The synchronisation coupling is typically used in non-driven (freewheeling) roll line assemblies to ensure that the rotational speed of the first assembly unit is equal to the rotational speed of the second assembly unit even if the roll mantle of the first assembly unit has no contact with the hot steel slab. In this context of the present invention, the term non-driven means that the roll line assembly is not actively driven by an engine, instead it rotates by being in contact with the flowing steel slab. It is not required that the synchronisation coupling is capable of transferring as big rotational torque as a bow teeth coupling since the former is typically used in non-driven (freewheeling) roll line assemblies.

In another example embodiment, the rotatable first shaft may be configured to be releasably connected to the rotatable second shaft via a bow teeth coupling. One advantage with a bow teeth coupling is that the rotatable first shaft and the rotatable second shaft are capable of transferring a bigger amount of rotational torque compared to other couplings. That is, a bow teeth coupling is used to transfer a rotational torque portion from a rotatable first shaft to a rotatable second shaft. Hence, this type of coupling is advantageously used in driven roll line assemblies (e.g. driven by means of an engine).

In yet another example embodiment, the rotatable first shaft may be configured to be releasably connected to the rotatable second shaft simply by being arranged in a fixed configuration along the axial direction of the roll line assembly, e.g. by having its outer end portions being attached to an external frame structure thereby preventing axial movement of the shafts. This type of coupling may not transfer rotational torque between the various shaft portions. Instead, each assembly unit rotates by itself upon contact with the flowing steel slab.

Although less common for this type of roll line assemblies, the rotatable first shaft may also be configured to be releasably connected to the rotatable second shaft via a plug connection (also denoted a plug and socket connection). In a plug and socket arrangement, a second end region of the rotatable first shaft may include the socket whilst a first end region of the rotatable second shaft may include one or several pins that fit into pin receptacles of the socket (i.e. the end region of the rotatable first shaft). More specifically, the socket typically comprises a body part and a pin receiving member having a plurality of pin receptacles. The pin receptacles are configured for providing openings in a front face of the socket and each being adapted to receive a respective pin of a plug.

These are simple and robust ways to connect two shafts together in a locking configuration. In addition, they may improve the axial alignment of shafts of the roll line assembly and/or the ability of the roll line assembly to withstand a load in the axial direction. In all example embodiments as mentioned above, it should be readily understood that once the assembly units are operatively engaged to each other, they are substantially fixed in the axial direction and retained in an axial alignment during use until being released by the remanufacturing workforce.

The bearings of the roll line assembly can be of various types. For instance, a bearing may be provided in the form of a locating bearing, e.g. a spherical roller bearing. A locating bearing is typically configured for locking the axial movement of the shaft of an assembly unit. Alternatively, a bearing may be provided in the form of a non-locating bearing, e.g. a toroidal roller bearing. A toroidal roller bearing combines the self-aligning capability of a spherical roller bearing with the axial displacement ability of a cylindrical roller bearing. To this end, the toroidal roller bearing is capable of taking care of an axial displacement of an assembly unit.

In one example embodiment, an assembly unit may comprise one non-locating bearing and one locating bearing. For example, the first bearing of the first assembly unit can be a locating bearing and the second bearing of the first assembly unit can be a non-locating bearing. In addition, or alternatively, the first bearing of the second assembly unit can be a locating bearing and the second bearing of the second assembly unit can be a non-locating bearing.

Advantageously, the bearing may be provided in the form of a spherical roller bearing. However, it is to be noted that any type of rolling bearing may be used in the roll line assembly. Hence, a bearing may be provided in the form of a radial rolling element bearing, a spherical roller thrust bearing, a tapered roller bearing, a cylindrical roller thrust bearing, a thrust ball bearing, an angular contact ball bearing, a toroidal roller bearing, a needle bearing, or a combination of two or more of these bearing types.

The rotatable first shaft can be completely encapsulated by the first roll mantle along a length L₁ of the rotatable first shaft. Similarly, the rotatable second shaft can be completely encapsulated by the second roll mantle along a length L₂ of the rotatable second shaft. Completely encapsulating a portion of a shaft by a mantle improves the protection of the shaft against hot material.

The first end region of the rotatable first shaft can extend beyond the first roll mantle in a direction along the first longitudinal axis. Likewise, the second end region of the rotatable first shaft can extend beyond the first roll mantle in an opposite direction along the first longitudinal axis. Analogously, the first end region of the rotatable second shaft can extend beyond the second roll mantle in a direction along the second longitudinal axis. Likewise, the second end region of the rotatable second shaft can extend beyond the second roll mantle in an opposite direction along the second longitudinal axis. A shaft extending beyond the corresponding roll mantle can facilitate the use of certain types of bearings, sealing elements and/or supporting blocks.

Both of, or one of, the first and second assembly units may comprise one or several supporting blocks. For example, a second supporting block of the first assembly unit can be arranged on the second end region of the rotatable first shaft and a first supporting block of the second assembly unit can be arranged on the first end region of the rotatable second shaft such that a surface of the second supporting block of the first assembly unit faces a surface of the first supporting block of the second assembly unit when the first assembly unit is operatively engaged with the second assembly unit. Furthermore, the second supporting block of the first assembly unit can encapsulate the second bearing of the first assembly unit. Similarly, the first supporting block of the second assembly unit can encapsulate the first bearing of the second assembly unit.

According to one example embodiment, the supporting block is arranged between the first roll mantle and the second roll mantle, as seen in the longitudinal axis of the roll line assembly. In other words, the supporting block is bridging between the roll mantles.

A supporting block may comprise a base portion for mounting the corresponding assembly unit in a supporting structure and a portion with a through-hole for receiving a shaft. The mounting of the roll line assembly in an external structure may be facilitated by the provision of one or several supporting blocks. Moreover, the supporting blocks may protect the bearings from, for example, water and water vapour from the cooling system.

The first end region of the rotatable first shaft can be an end region of the roll line assembly. Similarly, the second end region of the rotatable second shaft can be an end region of the roll line assembly. Hence, it should be readily appreciated that an assembly unit according to the description above can be mounted between another assembly unit and an external structure.

The roll line assembly may comprise one or more wedges for operatively connecting a shaft to a mantle. Such a wedge can also help prevent relative movement between a shaft and a mantle. For example, the first roll mantle can be operatively connected to the rotatable first shaft via a first wedge. In addition, or alternatively, the second roll mantle can be operatively connected to the rotatable second shaft via a second wedge. The first wedge can be positioned between the first inner surface and a first circumferential outer surface of the rotatable first shaft. Analogously, the second wedge can be positioned between the second inner surface and a second circumferential outer surface of the rotatable second shaft. The first wedge and the second wedge can be made of steel e.g. structural steel. Preferably, the steel is toughened or hardened and tempered.

It should be readily understood that a shaft can be operatively connected to a roll mantle by other connecting means, e.g. by a simple screw joint/bolted joint.

In one example embodiment, an assembly unit may be provided in the form of a driven assembly unit. Such an assembly unit can be driven by an engine or any other prime mover.

In various example embodiments, the roll line assembly may further comprise a sealing element being arranged along a circumference of the rotatable first shaft. In addition, or alternatively, the roll line assembly may further comprise a sealing element being arranged along a circumference of the rotatable second shaft. Thereby, the sealing element is arranged in-between an inner surface of the roll assembly and an outer surface of any of the rotatable first shaft and the rotatable second shaft. The advantage of the sealing element is that the bearing and/or the roll line shaft unit can be protected from water and dirt. In addition, the sealing element ensures that lubricant, e.g. grease, is maintained in the bearing. In this manner, the risk of having lubricant leakages is reduced.

In one example embodiment, the bearing is provided with an integrated sealing element and configured for retaining the lubricant in the bearing. In addition, or alternatively, the roll line module may comprise an additional sealing element (also denoted as a sealing cassette) enclosing the bearing. In this manner, the additional sealing element is capable of protecting the bearing from water and dirt.

There are several different possibilities to provide a functional reliable sealing element to the roll line assembly. For instance, the sealing element may be provided in the form of a static seal element. In addition, or alternatively, the sealing element may be provided in the form of a dynamic seal element. According to one example embodiment, the sealing element is provided in the form of a sealing cassette including one static seal element and one dynamic seal element. Hence, the sealing element may include a combination of a static seal element and a dynamic seal element.

According to one example embodiment, the roll line assembly may be a roll line assembly without a lubrication system, i.e. a re-lubrication free roll line assembly. One example of a roll line assembly of this type is shown in WO 2010/005354. As an example, the roll line assembly may be provided with a closed compartment for receiving lubricant for lubricating any one of the bearings of the roll line assembly. In this manner, the closed compartment keeps the lubricant in connection with the bearing.

The diameter of the roll line assembly may be between 100 - 300 mm. A roll mantle is typically made of steel and the sufficiently dimensioned to withstand the hot steel material. A shaft is typically made of steel and the thickness of the shaft may be between 50 - 160 mm.

According to a second aspect of the present invention, as defined in independent claim 12, there is provided an assembly unit for a roll line assembly for supporting and transporting hot material in a continuous caster. The assembly unit comprises a rotatable first shaft defining a first longitudinal axis and having a first end region spaced apart from a second end region along the first longitudinal axis, The assembly unit also has a first roll mantle enclosing the rotatable first shaft around a circumferential direction, the first roll mantle having a first outer surface for supporting and transporting hot material and a first inner surface being operatively connected to the rotatable first shaft. Furthermore, the assembly unit has a first bearing and a second bearing for allowing rotation of the first roll mantel and the rotatable first shaft about the first longitudinal axis, wherein the first bearing is arranged on the first end region and the second bearing is arranged on the second end region.

Since the shaft and the roll mantle of the assembly unit according to the present invention are separable, it becomes possible, for instance, to reuse the shaft when the corresponding roll mantle is damaged; i.e. only the damaged roll mantle needs to be replaced. Maintenance costs may thus be reduced. Moreover, costs can be reduced because the shaft can be produced from a bar having a smaller diameter than the mantle, which can reduce the amount of material required for producing the assembly unit.

As mentioned above, the rotatable first shaft of the assembly unit is provided with a coupling, wich is a synchronization coupling, bow teeth coupling, or plug connection, allowing the rotatable first shaft to be releasably connected to a rotatable second shaft.

Further features of, and advantages with, the present invention will become apparent when studying the appended claims and the following description. The skilled person realize that different features of the present invention may be combined to create embodiments other than those described in the following, without departing from the scope of the present invention. For example, the above description of the different advantages of the present invention is only described in relation to one roll line assembly. However, the various embodiments of the invention are of course also applicable when providing a plurality of roll line assemblies for supporting and transporting hot material in a continuous caster.

### Brief Description of the Drawings

The various aspects of the invention, including its particular features and advantages, will be readily understood from the following detailed description and the accompanying drawings, in which:
Fig. 1 is a cross sectional perspective view of an example embodiment of a roll line assembly according to the present invention in an assembled configuration;
Fig. 2 is an exploded view of the example embodiment of the roll line assembly in Fig. 1 according to the present invention.

### Detailed Description of Exemplary Embodiments of the Invention

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference characters refer to like elements throughout the description.

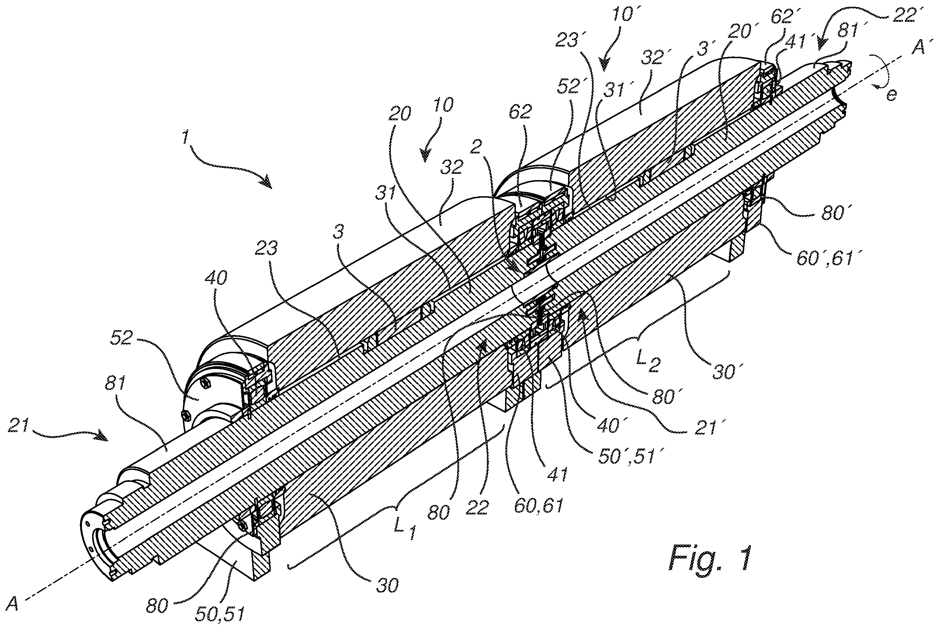

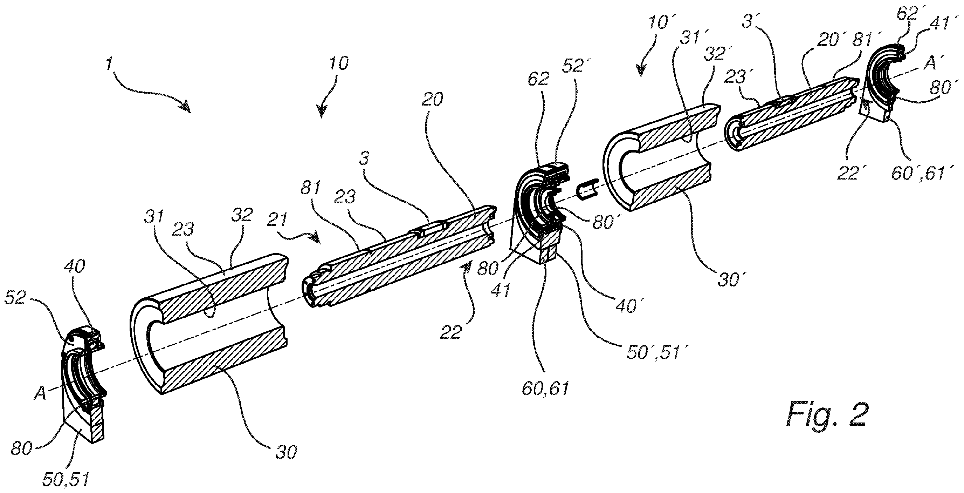

Referring now to Fig. 1 and Fig. 2, there is depicted an example embodiment of a roll line assembly 1 according to the present invention. The roll line assembly 1 is suitable for supporting and transporting hot material in a continuous caster. Continuous casting of steel, also called strand casting, is the process whereby slabs of metal are continuously cast from molten steel. Since the process of continuous casting is well-known to the skilled person, the description to follow is concerned with a roll line assembly being arranged downstream of the continuous casting process.

As is shown in Fig. 1 and Fig. 2, the roll line assembly 1 has an extension in an axial direction A. The roll line assembly 1 comprises first 10 and second 10' assembly units each of which has a shaft and a roll mantle. A first roll mantle 30 encloses a rotatable first shaft 20 along a circumferential direction C. The first roll mantle 30 has an outer surface 32 for supporting and transporting hot material and an inner surface 31 which is releasably attached to the rotatable first shaft 20 so that the first roll mantle 30 and the rotatable first shaft 20 cannot move relative to each other. In other words, the rotatable first shaft 20 is non-rotatable relative to the first roll mantle 30. Similarly, a second roll mantle 30' encloses a rotatable second shaft 20' along the circumferential direction C. The second roll mantle 30' has an outer surface 32' for supporting and transporting hot material and an inner surface 31' which is attached to the rotatable second shaft 20' so that the second roll mantle 30' and the rotatable second shaft 20' cannot move relative to each other. In other words, the rotatable second shaft 20' is non-rotatable relative to the second roll mantle 30'.

The first roll mantle 30 can be attached to the rotatable first shaft 20 via a first wedge 3 which is positioned between the first inner surface 31 and a first circumferential outer surface 23 of the rotatable first shaft 20 and which can help prevent relative movement between the rotatable first shaft 20 and the first roll mantle 30. Similarly, the second roll mantle 30' can be attached to the rotatable second shaft 20' via a second wedge 3' which is positioned between the second inner surface 31' and a second circumferential outer surface 23' of the rotatable second shaft 20' and which can help prevent relative movement between the rotatable second shaft 20' and the second roll mantle 30'.

The first 30 and second 30' roll mantles can be made of a structural steel which often is toughened in order to better withstand the hot temperature from the slab. Alternatively, the roll mantles can be made of stainless steel. However, the roll mantles 30, 30' can be made of any suitable material which is capable of being used in this specific environment. In addition, the structure of the roll mantles 30, 30' may comprise several layers of different material. As an example, the outer surfaces 31, 31' of the roll mantles 30, 30' can be made of a corrosive resistant material while the inner structure of the roll mantles 30, 30' is made of a different material. However, the roll mantles 30, 30' are typically made from one integral component.

As may be gleaned from Fig. 1, the rotatable first shaft 20 is completely encapsulated by the first roll mantle 30 along a length L₁ as seen in the axial direction A. A first end region 21 of the rotatable first shaft 20 can extend beyond the first roll mantle 30 as seen in the axial direction A. A second end region 22 of the rotatable first shaft 20 can extend beyond the first roll mantle 30 as seen in the axial direction A. In other words, the first 21 and the second 22 end regions of the rotatable first shaft 20 may project from the first roll mantle 30 as seen in the axial direction. Similarly, the rotatable second shaft 20' is completely encapsulated by the second roll mantle 30' along a length L₂ as seen in the axial direction A. A first end region 21' of the rotatable second shaft 20' can extend beyond the second roll mantle 30' as seen in the axial direction A. A second end region 22' of the rotatable second shaft 20' can extend beyond the second roll mantle 30' as seen in the axial direction A. In other words, the first 21' and the second 22' end regions of the rotatable second shaft 20' may project from the second roll mantle 30' as seen in the axial direction.

The assembly units 10, 10' further comprise bearings for enabling axial rotation of the shafts 20, 20'. A first bearing 40 of the first assembly unit 10 and a second bearing 41 of the first assembly unit 10 are arranged circumferentially around the first end region 21 of the rotatable first shaft 20 and the second end region 22 of the rotatable first shaft 20, respectively. Likewise, a first bearing 40' of the second assembly unit 10' and a second bearing 41' of the second assembly unit 10' are arranged circumferentially around the first end region 21' of the rotatable second shaft 20' and the second end region 22' of the rotatable second shaft 20', respectively.

By the above functional configuration, the first 40 and second bearings 41 of the first assembly unit 10 are arranged such that they are capable of supporting a rotational movement of the rotatable first shaft 20 around the axial direction A. Similarly, the first 40' and second bearings 41' of the second assembly unit 10' are arranged such that they are capable of supporting a rotational movement of the rotatable second shaft 20' around the axial direction A. The bearings 40, 41, 40', 41' can be locating bearings or a non-locating bearings. All of the bearings 40, 41, 40', 41' do not have to be of the same type. In order to prevent the bearing from dirt, it is often accommodated in a bearing housing.

The rotatable first shaft 20 is configured to be releasably connected to the rotatable second shaft 20' via a connection 2, for example a synchronization coupling and/or a bow teeth coupling. It should be readily appreciated that further explanation of this connection is not required for understanding the function of the present invention. Other alternatives may include a plug connection. The connection 2 can also comprise several complementary members which co-operate to connect the first 10 and the second 10' assembly units together and which can be arranged on the second end region 22 of the rotatable first shaft 20 and the first end region 21' of the rotatable second shaft 20'. By this configuration, the first 10 and second 10' assembly units are capable of being connected to each other, and disengaged from each other, in a simple manner. Also, the first assembly unit 10 and the second assembly unit 10' are maintained in axial alignment during rotation of the roll line assembly 1, i.e. when the roll line assembly 1 is used to support and transport the hot steel. Moreover, one of the assembly units, or a part thereof, can be readily removed and replaced (or interchanged) when damaged while the other assembly unit is reused. If, for example, the first roll mantle 30, but no other parts of the roll line assembly 1, is damaged by hot material, it is possible to replace only the first roll mantle 30. It is even possible to only replace the damaged or worn-out roll mantle 30, while maintaining the rotatable first shaft 20 provided that the latter is in sufficiently good condition. In addition, or alternatively, it is possible to only replace the damaged or worn-out rotatable first shaft 20, while maintaining the roll mantle 30 provided that the latter is in sufficiently good condition. Separation of the first roll mantle from the rotatable first shaft is typically carried out by removing the wedge 3.The situation as mentioned above with respect to the first assembly unit (first roll mantle and rotatable first shaft) is of course likewise applicable for the second assembly unit.

The roll line assembly 1 may comprise supporting blocks which encapsulate the bearings. The first bearing 40 of the first assembly unit 10 can be encapsulated by a first supporting block 50 of the first assembly unit 10. The second bearing 41 of the first assembly unit 10 can be encapsulated by a second supporting block 60 of the first assembly unit 10. The first supporting block 50 of the first assembly unit 10 can be arranged by the first end region 21 of the rotatable first shaft 20. The second supporting block 60 of the first assembly unit 10 can be arranged by the second end region 22 of the rotatable first shaft 20. Similarly, the first bearing 40' of the second assembly unit 10' can be encapsulated by a first supporting block 50' of the second assembly unit 10'. The second bearing 41' of the second assembly unit 10' can be encapsulated by a second supporting block 60' of the second assembly unit 10'. The first supporting block 50' of the second assembly unit 10' can be arranged by the first end region 21' of the rotatable second shaft 20'. The second supporting block 60' of the second assembly unit 10' can be arranged by the second end region 22' of the rotatable second shaft 20'.

The first supporting block 50 of the first assembly unit 10 may have a base portion 51 and a portion 52 having a through-hole for receiving a shaft, for example rotatable first shaft 20. The base portion 51 may be adapted for mounting on an external structure, for example a structure that supports the roll assembly 1. The other supporting blocks 60, 50', 60' may be similarly configured with respective base portions 61, 51', 61' and through-hole portions 62, 52', 62'.

In the example embodiment illustrated in Fig. 1 and Fig. 2, the roll line assembly 1 here further comprises a first sealing element 80 and a second sealing element 80'. The first sealing element 80 is arranged along a circumference of the rotatable first shaft 20. The second sealing arrangement 80' is arranged along a circumference of the rotatable second shaft 20'. Alternatively, the first sealing element 80 can be arranged in-between an inner surface 31 of the first roll mantle and the outer surface 81 of the rotatable first shaft 20 (not shown). Likewise, the second sealing arrangement 80' can be arranged in-between the inner surface 31' of the second roll mantle and the outer surface 81' of the rotatable second shaft 20'.

The sealing element 80, 80' is typically provided in the form of a sealing cassette including a static seal element and a dynamic seal element. In one example embodiment, the sealing element 80, 80' is a static seal element. In another example embodiment, the sealing element 80, 80' is dynamic seal element.

During operation, the first 10 and the second 10' assembly units rotate together around the longitudinal axis A, whereby a material, such as hot steel, which is supported by the first 32 and second 32'outer surfaces, is transported along a direction that is substantially perpendicular to the longitudinal axis A.

Thanks to the present invention, as described above with references to the Figs. 1 and 2, it becomes possible to provide a roll line assembly, the assembly units of which have replaceable shafts and mantels. More specifically, by the provision that the rotatable first shaft 20 is configured for being releasably connected to the rotatable second shaft 20', and the first mantel 30 and the second mantel 30' are configured for being releasably connected to the rotatable first shaft 20 and the rotatable second shaft 20', respectively, it is not required to replace the complete roll line assembly, or an entire assembly unit, when a part of an assembly unit is worn-out or due to various malfunctions of the continuous casting process, e.g. clogged cooling nozzles resulting in overheated bearings or normalized roll mantle surfaces that may accelerate wear of the components making up the roll line assembly. If the roll line assembly is arranged adjacent to the continuous casting machine, the roll line assembly may be damaged due to a break out, i.e. an accident caused by the failure of the walls of the hearth of the steel slab, resulting in liquid steel flowing uncontrolled out of the steel slab. Instead, by the principle of the present invention, it becomes possible to only replace the worn-out or damaged portion of the roll line assembly. Hence, the present invention is superior over prior art roll line assemblies, which require a complete replacement of either the roll line assembly or the roll line assembly unit.

Additionally, variations to the disclosed embodiment can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

### Reference numerals

A axial direction
A' axial direction
C circumferential direction
1 roll line assembly
2 connection
3, 3' first, second wedge
10, 10' first, second assembly unit
20, 20' rotatable first, second shaft
21, 21' first end region of rotatable first, second shaft
22, 22' second end region of rotatable first, second shaft
23, 23' first, second circumferential outer surface of rotatable first shaft, rotatable second shaft
30, 30' first, second roll mantle
31, 31' inner surface of first, second mantle
32, 32' outer surface of first, second mantle
40, 40' first bearing of first, second assembly unit
41, 41' second bearing of first, second assembly unit
50, 50' first supporting block of first, second assembly unit
60, 60' second supporting block of first, second assembly unit
51, 51' base portion of first supporting block of first, second assembly unit
52, 52' portion with through-hole of first supporting block of first, second assembly unit
61, 61' base portion of second supporting block of first, second assembly unit
62, 62' portion with through-hole of second supporting block of first, second assembly unit
80, 80' sealing element
81, 81' outer surface of rotatable first, second shaft

## Claims

1. A roll line assembly (1) for supporting and transporting hot material in a continuous caster, comprising a first assembly unit (10) and a second assembly unit (10');
the first assembly unit (10) comprising:
a rotatable first shaft (20) defining a first longitudinal axis (A) and having a first end region (21) spaced apart from a second end region (22) along the first longitudinal axis (A),
a first roll mantle (30) enclosing the rotatable first shaft (20) around a circumferential direction, the first roll mantle (30) having a first outer surface (32) for supporting and transporting hot material and a first inner surface (31) being operatively connected to the rotatable first shaft (20), and
a first bearing (40) and a second bearing (41) for allowing rotation of the first roll mantel (30) and the rotatable first shaft (20) about the first longitudinal axis (A), wherein the first bearing (40) is arranged on the first end region (21) and the second bearing (41) is arranged on the second end region (22); and
the second assembly unit (10') comprising:
a rotatable second shaft defining (20') a second longitudinal axis (A'), and having a first end region (21') spaced apart from a second end region (22') along the second longitudinal direction (A'),
a second roll mantle (30') enclosing the rotatable second shaft (20') around the circumferential direction, the second roll mantle (30') having a second outer surface (32') for supporting and transporting hot material and a second inner surface (31') being operatively connected to the rotatable second shaft (20'), and
a first bearing (40') and a second bearing (41') for allowing rotation of the second roll mantel (30') and the rotatable second shaft (20') about the second longitudinal axis(A'), wherein the first bearing (40') is arranged on the first end region (21') and the second bearing (41') is arranged on the second end region (22');
wherein the rotatable first shaft (20) is configured to be releasably connected to the rotatable second shaft (20') such that the rotatable first shaft (20) and the rotatable second shaft (20') can be maintained in longitudinal axial alignment during rotation of the roll line assembly (1), whereby the first assembly unit (10) is operatively engaged with the second assembly unit (10').

2. The roll line assembly (1) according to claim 1, wherein the rotatable first shaft (20) is configured to be releasably connected to the rotatable second shaft (20') via a synchronization coupling, bow teeth coupling, or plug connection.

3. The roll line assembly (1) according to any one of the preceding claims, wherein the first bearing (40) of the first assembly unit (10) is a locating bearing and the second bearing (41) of the first assembly unit (10) is a non-locating bearing and/or the first bearing (40') of the second assembly (10') unit is a locating bearing and the second bearing (41') of the second assembly unit (10') is a non-locating bearing.

4. The roll line assembly (1) according to any one of the preceding claims, wherein the rotatable first shaft (20) is completely encapsulated by the first roll mantle (30) along a length (L₁) of the rotatable first shaft (20), and/or the rotatable second shaft (20') is completely encapsulated by the second roll mantle (30') along a length (L₂) of the rotatable second shaft (20').

5. The roll line assembly (1) according to any one of the preceding claims, wherein the first end region (21) of the rotatable first shaft (20) extends beyond the first roll mantle (30) in a direction along the first longitudinal axis (A), and the second end region (22) of the rotatable first shaft (20) extends beyond the first roll mantle (30) in an opposite direction of first longitudinal axis (A).

6. The roll line assembly (1) according to any one of the preceding claims, wherein the first end region (21') of the rotatable second shaft (20') extends beyond the second roll mantle (30') in a direction along the second longitudinal axis (A'), and the second end region (22') of the rotatable second shaft (20') extends beyond the second roll mantle (30') in an opposite direction of second longitudinal axis (A').

7. The roll line assembly (1) according to any one of the preceding claims, wherein the second bearing (41) of the first assembly unit (10) is encapsulated by a second supporting block (60) and the first bearing (40') of the second assembly unit (10') is encapsulated by a first supporting block (50'), the second supporting block (60) being arranged on the second end region (22) of the rotatable first shaft (20) and the first supporting block (50') being arranged on the first end region (21') of the rotatable second shaft (20') such that a surface of the second supporting block (60) is facing a surface of the first supporting block (50') when the first assembly unit (10) is operatively engaged with the second assembly unit (10').

8. The roll line assembly (1) according to any one of the preceding claims, wherein the first end region (21) of the rotatable first shaft (20) is an end region of the roll line assembly (1).

9. The roll line assembly (1) according to any one of the preceding claims, wherein the second end region (22') of the rotatable second shaft (20') is an end region of the roll line assembly (1).

10. The roll line assembly (1) according to any one of the preceding claims, wherein the first roll mantle (30) is operatively connected to the rotatable first shaft (20) via a first wedge (3).

11. The roll line assembly (1) according to any one of the preceding claims, wherein the second roll mantle (30') is operatively connected to the rotatable second shaft (20') via a second wedge (3').

12. An assembly unit for a roll line assembly for supporting and transporting hot material in a continuous caster, comprising:
a rotatable first shaft (20) defining a first longitudinal axis (A) and having a first end region (21) spaced apart from a second end region (22) along the first longitudinal axis (A),
a first roll mantle (30) enclosing the rotatable first shaft (20) around a circumferential direction, the first roll mantle (30) having a first outer surface (32) for supporting and transporting hot material and a first inner surface (31) being operatively connected to the rotatable first shaft (20), and
a first bearing (40) and a second bearing (41) for allowing rotation of the first roll mantel (30) and the rotatable first shaft (20) about the first longitudinal axis (A), wherein the first bearing (40) is arranged on the first end region (21) and the second bearing (41) is arranged on the second end region (22),
wherein the rotatable first shaft (20) is provided with a coupling, being a synchronization coupling, bow teeth coupling or plug connection, allowing the rotatable first shaft (20) to be releasably connected to a rotatable second shaft (20').

## Patentansprüche

1. Wälzlinienbaugruppe (1) zum Tragen und Transportieren von heißem Material in einer Stranggussanlage, umfassend eine erste Baueinheit (10) und eine zweite Baueinheit (10'),
wobei die erste Baueinheit (10) Folgendes umfasst:
eine drehbare erste Welle (20), die eine erste Längsachse (A) definiert und einen ersten Endbereich (21) aufweist, der entlang der ersten Längsachse (A) zu einem zweiten Endbereich (22) beabstandet ist,
einen die drehbare erste Welle (20) entlang einer Umfangsrichtung umgebenden ersten Wälzmantel (30), wobei der erste Wälzmantel (30) eine erste Außenfläche (32) zum Tragen und Transportieren von heißem Material und eine erste Innenfläche (31) aufweist, die mit der drehbaren ersten Welle (20) in Wirkverbindung steht, und
ein erstes Lager (40) und ein zweites Lager (41), um eine Drehung des ersten Wälzmantels (30) und der drehbaren ersten Welle (20) um die erste Längsachse (A) zu ermöglichen, wobei das erste Lager (40) auf dem ersten Endbereich (21) angeordnet ist und das zweite Lager (41) auf dem zweiten Endbereich (22) angeordnet ist, und
die zweite Baueinheit (10') Folgendes umfasst:
eine drehbare zweite Welle (20'), die eine zweite Längsachse (A') definiert und einen ersten Endbereich (21') aufweist, der entlang der zweiten Längsachse (A') zu einem zweiten Endbereich (22') beabstandet ist, einen die drehbare zweite Welle (20') entlang der Umfangsrichtung umgebenden zweiten Wälzmantel (30'), wobei der zweite Wälzmantel (30') eine zweite Außenfläche (32') zum Tragen und Transportieren von heißem Material und eine zweite Innenfläche (31') aufweist, die mit der drehbaren zweiten Welle (20') in Wirkverbindung steht, und
ein erstes Lager (40') und ein zweites Lager (41'), um eine Drehung des zweiten Wälzmantels (30') und der drehbaren zweiten Welle (20') um die zweite Längsachse (A') zu ermöglichen, wobei das erste Lager (40') auf dem ersten Endbereich (21') angeordnet ist und das zweite Lager (41') auf dem zweiten Endbereich (22') angeordnet ist,
wobei die drehbare erste Welle (20) dafür ausgelegt ist, derart lösbar mit der drehbaren zweiten Welle (20') verbunden zu sein, dass die drehbare erste Welle (20) und die drehbare zweite Welle (20') während einer Drehung der Wälzlinienbaugruppe (1) in längsaxialer Ausrichtung gehalten werden können, wodurch die erste Baueinheit (10) mit der zweiten Baueinheit (10') in Wirkeingriff steht.

2. Wälzlinienbaugruppe (1) nach Anspruch 1, wobei die drehbare erste Welle (20) dafür ausgelegt ist, über eine Synchronisationskupplung, Bogenzahnkupplung oder Steckverbindung lösbar mit der drehbaren zweiten Welle (20') verbunden zu sein.

3. Wälzlinienbaugruppe (1) nach einem der vorhergehenden Ansprüche, wobei es sich beim ersten Lager (40) der ersten Baueinheit (10) um ein Festlager und beim zweiten Lager (41) der ersten Baueinheit (10) um ein Loslager und/oder beim ersten Lager (40') der zweiten Baueinheit (10') um ein Festlager und beim zweiten Lager (41') der zweiten Baueinheit (10') um ein Loslager handelt.

4. Wälzlinienbaugruppe (1) nach einem der vorhergehenden Ansprüche, wobei die drehbare erste Welle (20) entlang einer Länge (L₁) der drehbaren ersten Welle (20) vollständig vom ersten Wälzmantel (30) umschlossen ist und/oder die drehbare zweite Welle (20') entlang einer Länge (L₂) der drehbaren zweiten Welle (20') vollständig vom zweiten Wälzmantel (30') umschlossen ist.

5. Wälzlinienbaugruppe (1) nach einem der vorhergehenden Ansprüche, wobei sich der erste Endbereich (21) der drehbaren ersten Welle (20) in einer Richtung entlang der ersten Längsachse (A) über den ersten Wälzmantel (30) hinaus erstreckt und sich der zweite Endbereich (22) der drehbaren ersten Welle (20) in einer entgegengesetzten Richtung der ersten Längsachse (A) über den ersten Wälzmantel (30) hinaus erstreckt.

6. Wälzlinienbaugruppe (1) nach einem der vorhergehenden Ansprüche, wobei sich der erste Endbereich (21') der drehbaren zweiten Welle (20') in einer Richtung entlang der zweiten Längsachse (A') über den zweiten Wälzmantel (30') hinaus erstreckt und sich der zweite Endbereich (22') der drehbaren zweiten Welle (20') in einer entgegengesetzten Richtung der zweiten Längsachse (A') über den zweiten Wälzmantel (30') hinaus erstreckt.

7. Wälzlinienbaugruppe (1) nach einem der vorhergehenden Ansprüche, wobei das zweite Lager (41) der ersten Baueinheit (10) von einem zweiten Tragblock (60) umschlossen ist und das erste Lager (40') der zweiten Baueinheit (10') von einem ersten Tragblock (50') umschlossen ist, wobei der zweite Tragblock (60) auf dem zweiten Endbereich (22) der drehbaren ersten Welle (20) angeordnet ist und der erste Tragblock (50') auf dem ersten Endbereich (21') der drehbaren zweiten Welle (20') angeordnet ist, und zwar derart, dass eine Fläche des zweiten Tragblocks (60) einer Fläche des ersten Tragblocks (50') zugewandt ist, wenn die erste Baueinheit (10) mit der zweiten Baueinheit (10') in Wirkeingriff steht.

8. Wälzlinienbaugruppe (1) nach einem der vorhergehenden Ansprüche, wobei es sich beim ersten Endbereich (21) der drehbaren ersten Welle (20) um einen Endbereich der Wälzlinienanordnung (1) handelt.

9. Wälzlinienbaugruppe (1) nach einem der vorhergehenden Ansprüche, wobei es sich beim zweiten Endbereich (22') der drehbaren zweiten Welle (20') um einen Endbereich der Wälzlinienbaugruppe (1) handelt.

10. Wälzlinienbaugruppe (1) nach einem der vorhergehenden Ansprüche, wobei der erste Wälzmantel (30) über einen ersten Keil (3) mit der drehbaren ersten Welle (20) in Wirkverbindung steht.

11. Wälzlinienbaugruppe (1) nach einem der vorhergehenden Ansprüche, wobei der zweite Wälzmantel (30') über einen zweiten Keil (3') mit der drehbaren zweiten Welle (20') in Wirkverbindung steht.

12. Baueinheit für eine Wälzlinienbaugruppe zum Tragen und Transportieren von heißem Material in einer Stranggussanlage, umfassend:
eine drehbare erste Welle (20), die eine erste Längsachse (A) definiert und einen ersten Endbereich (21) aufweist, der entlang der ersten Längsachse (A) zu einem zweiten Endbereich (22) beabstandet ist,
einen die drehbare erste Welle (20) entlang einer Umfangsrichtung umgebenden ersten Wälzmantel (30), wobei der erste Wälzmantel (30) eine erste Außenfläche (32) zum Tragen und Transportieren von heißem Material und eine erste Innenfläche (31) aufweist, die mit der drehbaren ersten Welle (20) in Wirkverbindung steht, und
ein erstes Lager (40) und ein zweites Lager (41), um eine Drehung des ersten Wälzmantels (30) und der drehbaren ersten Welle (20) um die erste Längsachse (A) zu ermöglichen, wobei das erste Lager (40) auf dem ersten Endbereich (21) angeordnet ist und das zweite Lager (41) auf dem zweiten Endbereich (22) angeordnet ist,
wobei die drehbare erste Welle (20) mit einer Kupplung versehen ist, bei der es sich um eine Synchronisationskupplung, Bogenzahnkupplung oder Steckverbindung handelt, die eine lösbare Verbindung der drehbaren ersten Welle (20) mit einer drehbaren zweiten Welle (20') ermöglicht.

## Revendications

1. Ensemble (1) de lignes de rouleaux permettant de supporter et de transporter un matériau chaud dans une machine de coulée continue, comprenant une première unité d'assemblage (10) et une seconde unité d'assemblage (10') ;
la première unité d'assemblage (10) comprenant :
un premier arbre rotatif (20) définissant un premier axe longitudinal (A) et ayant une première région d'extrémité (21) espacée d'une seconde région d'extrémité (22) le long du premier axe longitudinal (A),
une première enveloppe (30) de rouleau renfermant le premier arbre rotatif (20) autour d'une direction circonférentielle, la première enveloppe (30) de rouleau ayant une première surface extérieure (32) pour supporter et transporter un matériau chaud et une première surface intérieure (31) étant reliée de manière fonctionnelle au premier arbre rotatif (20), et
un premier palier (40) et un second palier (41) pour permettre la rotation de la première enveloppe (30) de rouleau et du premier arbre rotatif (20) autour du premier axe longitudinal (A), dans lequel le premier palier (40) est agencé sur la première région d'extrémité (21) et le second palier (41) est agencé sur la seconde région d'extrémité (22) ; et
la seconde unité d'assemblage (10') comprenant :
un second arbre rotatif (20') définissant un second axe longitudinal (A'), et ayant une première région d'extrémité (21') espacée d'une seconde région d'extrémité (22') le long de la seconde direction longitudinale (A'),
une seconde enveloppe (30') de rouleau renfermant le second arbre rotatif (20') autour de la direction circonférentielle, la seconde enveloppe de rouleau (30') ayant une seconde surface extérieure (32') pour supporter et transporter un matériau chaud et une seconde surface intérieure (31') étant reliée de manière fonctionnelle au second arbre rotatif (20'), et
un premier palier (40') et un second palier (41') pour permettre la rotation de la seconde enveloppe (30') de rouleau et du second arbre rotatif (20') autour du second axe longitudinal (A'), dans lequel le premier palier (40') est agencé sur la première région d'extrémité (21') et le second palier (41') est agencé sur la seconde région d'extrémité (22') ;
dans lequel le premier arbre rotatif (20) est configuré pour être relié de manière amovible au second arbre rotatif (20') de telle sorte que le premier arbre rotatif (20) et le second arbre rotatif (20') peuvent être maintenus en alignement axial longitudinal pendant la rotation de l'ensemble (1) de lignes de rouleaux, la première unité d'assemblage (10) étant mise en prise fonctionnelle avec la seconde unité d'assemblage (10').

2. Ensemble (1) de lignes de rouleaux selon la revendication 1, dans lequel le premier arbre rotatif (20) est configuré pour être relié de manière amovible au second arbre rotatif (20') par l'intermédiaire d'un accouplement de synchronisation, d'un accouplement à denture arquée ou d'une connexion enfichable.

3. Ensemble (1) de lignes de rouleaux selon l'une quelconque des revendications précédentes, dans lequel le premier palier (40) de la première unité d'assemblage (10) est un palier fixe et le second palier (41) de la première unité d'assemblage (10) est un palier libre et/ou le premier palier (40') de la seconde unité d'assemblage (10') est un palier fixe et le second palier (41') de la seconde unité d'assemblage (10') est un palier libre.

4. Ensemble (1) de lignes de rouleaux selon l'une quelconque des revendications précédentes, dans lequel le premier arbre rotatif (20) est complètement renfermé par la première enveloppe (30) de rouleau sur une longueur (L₁) du premier arbre rotatif (20), et/ou le second arbre rotatif (20') est complètement renfermé par la seconde enveloppe (30') de rouleau sur une longueur (L₂) du second arbre rotatif (20').

5. Ensemble (1) de lignes de rouleaux selon l'une quelconque des revendications précédentes, dans lequel la première région d'extrémité (21) du premier arbre rotatif (20) s'étend au-delà de la première enveloppe (30) de rouleau dans une direction le long du premier axe longitudinal (A) et la seconde région d'extrémité (22) du premier arbre rotatif (20) s'étend au-delà de la première enveloppe (30) de rouleau dans une direction opposée du premier axe longitudinal (A).

6. Ensemble (1) de lignes de rouleaux selon l'une quelconque des revendications précédentes, dans lequel la première région d'extrémité (21') du second arbre rotatif (20') s'étend au-delà de la seconde enveloppe (30') de rouleau dans une direction le long du second axe longitudinal (A') et la seconde région d'extrémité (22') du second arbre rotatif (20') s'étend au-delà de la seconde enveloppe (30') de rouleau dans une direction opposée du second axe longitudinal (A').

7. Ensemble (1) de lignes de rouleaux selon l'une quelconque des revendications précédentes, dans lequel le second palier (41) de la première unité d'assemblage (10) est renfermé par un second bloc de support (60) et le premier palier (40') de la seconde unité d'assemblage (10') est renfermé par un premier bloc de support (50'), le second bloc de support (60) étant disposé sur la seconde région d'extrémité (22) du premier arbre rotatif (20) et le premier bloc de support (50') étant disposé sur la première région d'extrémité (21') du second arbre rotatif (20') de sorte qu'une surface du second bloc de support (60) est tournée vers une surface du premier bloc de support (50') lorsque la première unité d'assemblage (10) est mise en prise fonctionnelle avec la seconde unité d'assemblage (10').

8. Ensemble (1) de lignes de rouleaux selon l'une quelconque des revendications précédentes, dans lequel la première région d'extrémité (21) du premier arbre rotatif (20) est une région d'extrémité de l'ensemble (1) de lignes de rouleaux.

9. Ensemble (1) de lignes de rouleaux selon l'une quelconque des revendications précédentes, dans lequel la seconde région d'extrémité (22') du second arbre rotatif (20') est une région d'extrémité de l'ensemble (1) de lignes de rouleaux.

10. Ensemble (1) de lignes de rouleaux selon l'une quelconque des revendications précédentes, dans lequel la première enveloppe (30) de rouleau est reliée de manière fonctionnelle au premier arbre rotatif (20) via une première cale (3).

11. Ensemble (1) de lignes de rouleaux selon l'une quelconque des revendications précédentes, dans lequel la seconde enveloppe (30') de rouleau est reliée de manière fonctionnelle au second arbre rotatif (20') par l'intermédiaire d'une seconde cale (3').

12. Unité d'assemblage pour un ensemble de lignes de rouleaux pour supporter et transporter un matériau chaud dans une machine de coulée continue, comprenant :
un premier arbre rotatif (20) définissant un premier axe longitudinal (A) et ayant une première région d'extrémité (21) espacée d'une seconde région d'extrémité (22) le long du premier axe longitudinal (A),
une première enveloppe (30) de rouleau renfermant le premier arbre rotatif (20) autour d'une direction circonférentielle, la première enveloppe (30) de rouleau ayant une première surface extérieure (32) pour supporter et transporter un matériau chaud et une première surface intérieure (31) étant reliée de manière fonctionnelle au premier arbre rotatif (20), et
un premier palier (40) et un second palier (41) pour permettre la rotation de la première enveloppe (30) de rouleau et du premier arbre rotatif (20) autour du premier axe longitudinal (A), dans lequel le premier palier (40) est agencé sur la première région d'extrémité (21) et le second palier (41) est agencé sur la seconde région d'extrémité (22),
dans laquelle le premier arbre rotatif (20) est muni d'un accouplement, qui est un accouplement de synchronisation, un accouplement à denture arquée ou une connexion enfichable, permettant au premier arbre rotatif (20) d'être relié de manière amovible à un second arbre rotatif (20').
